# EUROPÄISCHE PATENTSCHRIFT

(11) **EP 2 527 127 B1**
(45) Veröffentlichungstag und Bekanntmachung des Hinweises auf die Patenterteilung: **18.06.2014**
(21) Anmeldenummer: 12169045.7
(22) Anmeldetag: 23.05.2012
(51) Int. Cl.: B32B 37/00, B32B 37/10, B32B 38/18, B29C 63/00, B29C 63/02, B29L 31/30, B32B 37/12

(54) **Verfahren und Vorrichtung zum Kaschieren eines Bauteils**
Method and device for laminating a structural member
Procédé et dispositif destinés à masquer un composant

(30) Priorität: 24.05.2011 DE 102011102998
(43) Veröffentlichungstag der Anmeldung: 28.11.2012
(73) Patentinhaber: Greidenweis Maschinenbau GmbH, 78549 Spaichingen (DE)
(72) Erfinder: Greidenweis, Michael, 78549 Spaichingen (DE)
(74) Vertreter: Patentanwälte Westphal, Mussgnug & Partner

(56) Entgegenhaltungen:
- AT-U1- 6 733
- DE-A1- 10 039 332
- DE-A1-102005 042 819
- DE-A1-102008 046 084
- DE-A1-102010 037 177
- DE-C1- 19 958 316
- JP-A- 3 288 607

## Beschreibung

Die vorliegende Erfindung betrifft ein Verfahren zum Kaschieren eines auf einem Unterwerkzeug eines Druckwerkzeuges angeordneten mit einem vorfixierten Kaschierstoff belegten Bauteils, insbesondere eines Innenverkleidungsbauteils für ein Kraftfahrzeug mit den Merkmalen des Oberbegriffs des Anspruchs 1 sowie eine Vorrichtung zum Kaschieren eines Bauteils mit den Merkmalen des Oberbegriffs des Anspruchs 4.

Innenverkleidungsbauteile für Kraftfahrzeuge werden heute in der Regel aus Kunststoff gefertigt und besitzen häufig eine mehrschichtige Struktur aus mindestens einem Trägerbauteil und einer Oberflächenschicht. Es handelt sich dabei meist um spritzgegossene Kunststoffbauteile, bei denen als Oberflächenschicht oder Dekorschicht häufig Formhäute, Gewebe, Textilstoffe, Leder oder Kunstleder eingesetzt werden. Auch heute wird insbesondere bei empfindlichen Materialien immer noch die sogenannte Kaschiertechnik eingesetzt, bei der das Bauteil in einem separaten Arbeitsgang hergestellt wird, um anschließend mit dem Kaschierstoff kaschiert zu werden, wobei der Kaschierstoff fest mit der Bauteiloberfläche verbunden wird.

Derartige Kaschierverfahren werden beispielsweise in der WO 2005/037586 A1, der DE 2 925 500 A1, der DE 19958316 C1 und der DE 10 2005 042 819 A1 beschrieben.

In der Regel handelt es sich bei den Kaschierwerkzeugen um Druckwerkzeuge, die sich aus einem Oberwerkzeug und einem Unterwerkzeug zusammensetzen, wobei beim Kaschiervorgang das zu kaschierende Bauteil formschlüssig auf dem Unterwerkzeug aufliegt und der Kaschierstoff mit Hilfe des Oberwerkzeuges, das ebenfalls der Form des Bauteils angepasst ist, auf die Bauteiloberfläche gepresst wird. Die Verbindung zwischen Bauteiloberfläche und Kaschierstoff erfolgt durch Aktivierung und Ausbildung einer Klebezwischenschicht.

Ein Nachteil der bekannten Verfahren besteht darin, dass bei kompliziert geformten Bauteilen das Ausrichten des Kaschierstoffes häufig mit Problemen verbunden ist und es beim Zusammenführen des Unterwerkzeuges und Oberwerkzeuges zu Verschiebungen des Kaschierstoffes kommen kann, was insbesondere bei Innenverkleidungsbauteilen für Kraftfahrzeuge, bei denen die einwandfreie Optik eine sehr große Rolle spielt, zu großen Problemen führt.

Aufgabe der vorliegenden Erfindung ist es daher, ein Verfahren und eine Vorrichtung anzubieten, mit deren Hilfe die oben genannten Probleme vermieden werden können. Gelöst wird die Aufgabe durch ein Verfahren mit den Merkmalen des Anspruchs 1 sowie eine Vorrichtung mit den Merkmalen des Anspruchs 4.

Vorteilhafte Ausgestaltungen und Weiterentwicklungen des Verfahrens sowie der Vorrichtung sind Gegenstand der entsprechenden Unteransprüche.

Das erfindungsgemäße Verfahren basiert darauf, während des Kaschierens durch geeignete Maßnahmen ein Verschieben oder Verrutschen des Kaschierstoffes auf der Bauteiloberfläche zu vermeiden.

Dies gelingt mit einem Verfahren zum Kaschieren eines auf einem Unterwerkzeug eines Druckwerkzeuges angeordneten mit einem vorfixierten Kaschierstoff belegten Bauteils, insbesondere eines Innenverkleidungsbauteils für ein Kraftfahrzeug, bei dem der Kaschierstoff in einem ersten Schritt bei offenem Druckwerkzeug auf der Oberfläche des Bauteils mit einer Nahtfixierbrille fixiert wird. Anschließend wird das Unterwerkzeug zusammen mit dem Bauteil und der aufgebrachten Nahtfixierbrille in einen Temperierofen gefahren, wo die zwischen Bauteiloberfläche und Kaschierstoff vorgesehene Klebeschicht aktiviert wird.

Nach der Aktivierung der Klebeschicht wird das Unterwerkzeug aus dem Kaschierofen entfernt und das Druckwerkzeug wird durch Zusammenführen von Oberwerkzeug und Unterwerkzeug geschlossen. Entscheidend ist dabei, dass die Nahtfixierbrille als integraler Bestandteil des Oberwerkzeugs ausgebildet ist und beim Zusammenführen von Oberwerkzeug und Unterwerkzeug in seiner Fixierposition auf dem mit dem Kaschierstoff belegten Bauteil verbleibt. Dies wird dadurch ermöglicht, dass das Oberwerkzeug eine Aufnahme für die Nahtfixierbrille aufweist, in die diese beim Schließen des Druckwerkzeuges eingeführt wird. Auf diese Weise wird gewährleistet, dass der Kaschierstoffes beim Zusammenführen der beiden Werkzeugteile fixiert bleibt und es nicht zu einem Verrutschen des Kaschierstoffes kommen kann.

Nach dem Schließen des Druckwerkzeuges wird die Verbindungsbildung zwischen Bauteil und Kaschierstoff durch Ausüben von Druck durch das Oberwerkzeug auf die Bauteiloberfläche vollendet. Bei diesem Verfahrensschritt wird das Druckwerkzeug vorteilhaft gekühlt, womit die endgültige Fixierung des Kaschierstoffes auf der Bauteiloberfläche beschleunigt werden kann.

Das oben beschriebene Verfahren ist geeignet für Kaschierstoffe mit oder ohne Naht, ausgewählt aus der Gruppe Leder, Kunststofffolie, Textilstoffe, Gewebe und Kunstleder.

Gegenstand der vorliegenden Erfindung ist auch eine Vorrichtung zum Kaschieren eines mit einem vorfixierten Kaschierstoff belegten Bauteils, insbesondere eines Innenverkleidungsbauteils für ein Kraftfahrzeug, wobei die Vorrichtung eine Kaschierpresse, ein Druckwerkzeug und einen Kaschier- oder Temperierofen umfasst. Das Druckwerkzeug besteht aus einem Oberwerkzeug und einem Unterwerkzeug, wobei das Unterwerkzeug als primäre Bauteilaufnahme vorgesehen ist, während das Oberwerkzeug, das eine Nahtfixierbrille als integralen Bestandteil aufweist und entsprechende Aufnahmen zur Einführung der Nahtfixierbrille umfasst, zum Aufbau von Druck auf die Bauteiloberfläche vorgesehen ist.

Im Folgenden wird die vorliegende Erfindung anhand eines Ausführungsbeispiels und den entsprechenden Zeichnungen ausführlich erläutert. Dabei zeigen die
- Figuren 1 und 2: jeweils in der gleichen Schnittdarstellung einen Ausschnitt des erfindungsgemäßen Druckwerkzeuges zu unterschiedlichen Verfahrenszeitpunkten;
- Figur 2a: einen vergrößerten Ausschnitt aus Figur 2;
- Figur 3: einen perspektivischen Ausschnitt aus dem erfindungsgemäßen Druckwerkzeugs; und
- Figur 4: eine weitere Schnittdarstellung des Ausschnitts aus den Figuren 1 und 2.

Bevor die Figuren im Detail erläutert werden, ist anzumerken, dass es sich bei den ausgewählten Zeichnungen um skizzenartige, relativ kleine Ausschnitte eines erfindungsgemäßen Druckwerkzeugs handelt, die dazu dienen und auch gezielt dazu ausgewählt wurden, das Erfindungsprinzip wiederzugeben und zu verdeutlichen. Für den Fachmann ist es selbstverständlich, dass die gesamte Kaschiervorrichtung, die eine Kaschierpresse, ein Kaschierwerkzeug mit Oberwerkzeug, Unterwerkzeug und Nahtfixierbrille sowie einen Kaschierofen umfasst, wobei jeder der oben aufgeführten Teilbereiche der Vorrichtung eine eigene maschinenbautechnische Peripherie aufweist, wesentlich komplexer ist als es aus den ausgewählten Zeichnungen hervorgeht.

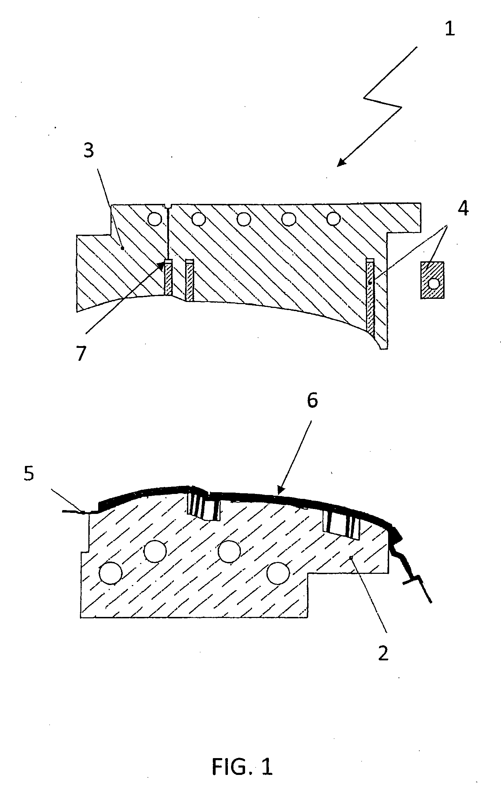

Die Figur 1 zeigt das geöffnete Druckwerkzeug 1 mit dem Oberwerkzeug 3 und dem Unterwerkzeug 2, wobei auf dem Unterwerkzeug 2 bereits das mit einem vorfixierten Kaschierstoff 6 belegte Bauteil 5 angeordnet ist, während die Fixierbrille 4 noch in ihrer Ausgangsposition in den Aufnahmen 7 im Oberwerkzeug 3 integriert ist.

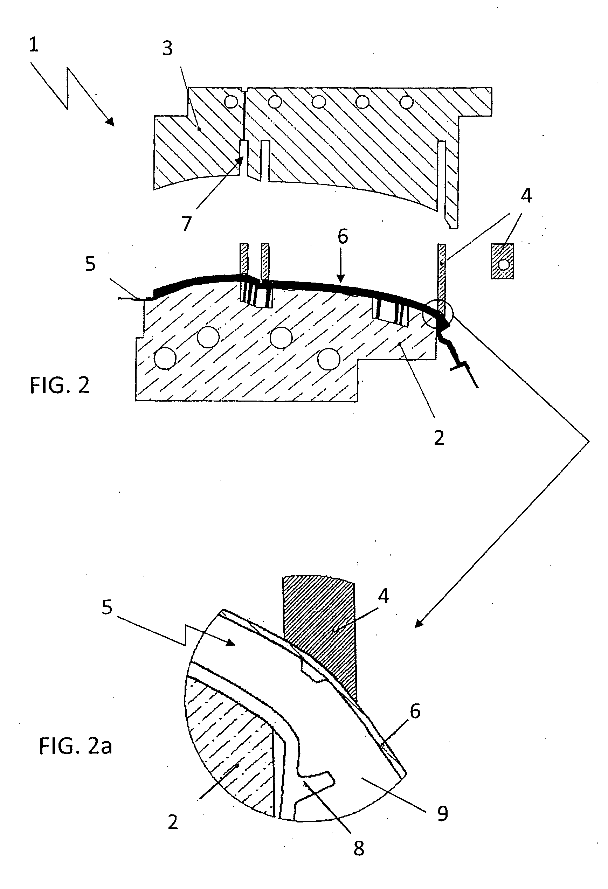

Die Figur 2 zeigt ebenfalls als Schnittdarstellung einen Ausschnitt des Kaschierwerkzeuges im geöffneten Zustand, wobei die Fixierbrille 4 nun auf dem Kaschierstoff 6 aufliegt und so den Kaschierstoff 6 fixiert und ein Verrutschen des Kaschierstoffs 6 verhindert.

In dieser Situation wird nun das Unterwerkzeug 2 mitsamt Bauteil 5 und Nahtfixierbrille 4 in den Kaschierofen gefahren, wo die Aktivierung des Klebers erfolgt. Dieser Verfahrensschritt ist in den Zeichnungen allerdings nicht wiedergegeben.

Für diesen Schritt können unterschiedliche Kleber eingesetzt werden. Bei einer vorteilhaften Ausgestaltung der vorliegenden Erfindung werden dazu wärmeaktivierbare Kleber, sogenannte Hot-Melts, eingesetzt und die Temperaturen im Kaschierofen werden so gewählt, dass der Klebstoff vollständig aktiviert wird und das Bauteil mit dem Kaschierstoff eine feste Verbindung eingehen kann.

In der Figur 2a ist ein vergrößerter Ausschnitt aus Figur 2 zu sehen. Dieser vergrößerte Ausschnitt wurde gewählt, um den Aufbau des Bauteils 5 zu verdeutlichen, das aus einem Träger 8, einer Zwischenschicht 9 und dem als Dekorschicht vorgesehenen Kaschierstoff 6 aufgebaut ist. Das Bauteil 5 liegt auf dem Unterwerkzeug 2 auf, wobei der Kaschierstoff 6 mit der Nahtfixierbrille 4 fixiert ist.

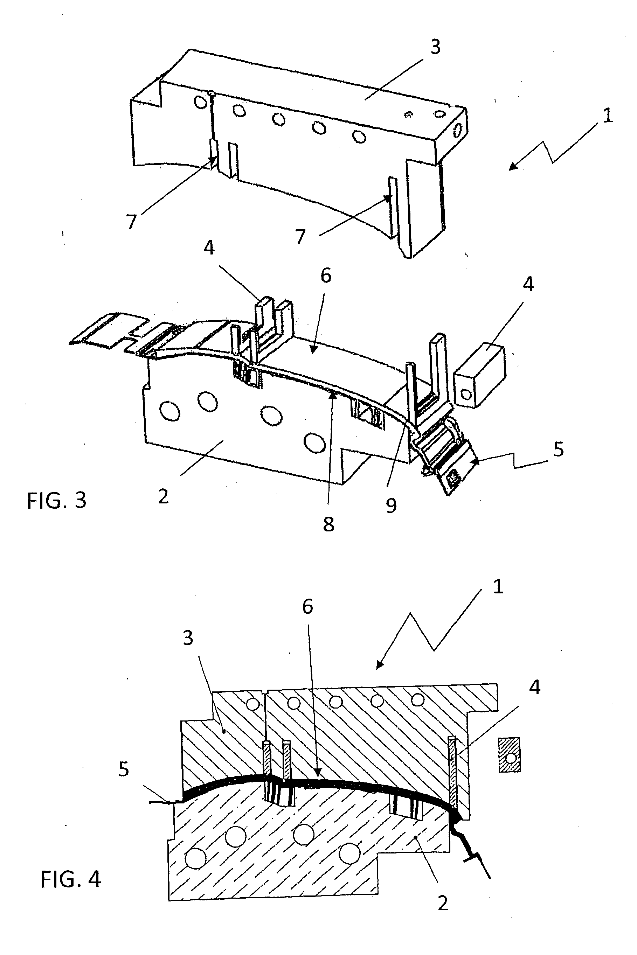

Die Figur 3 zeigt eine perspektivische Draufsicht auf den Ausschnitt aus Figur 2. Das Druckwerkzeug 1 ist immer noch geöffnet, während die Nahtfixierbrille 4 bereits auf dem Kaschierstoff 6 aufliegt und diesen auf dem Bauteil 5 fixiert, das wiederum auf dem Unterwerkzeug 2 aufliegt. Bei der gewählten Darstellung ist ebenfalls die Schichtstruktur des Bauteils 5 mit Träger 8 und Zwischenschicht 9 zu erkennen.

In der Figur 4 ist der letzte Verfahrensschritt festgehalten, nachdem das Unterwerkzeug 2 aus dem Kaschierofen in die Kaschierpresse zurückgefahren wurde und das Oberwerkzeug 3 mit dem Unterwerkzeug 2 zusammengeführt ist, so dass das mit dem Kaschierstoff 6 belegte Bauteil 5 zwischen den beiden Werkzeugen eingeschlossen ist. Hier erfolgt mit Hilfe von Druck die endgültige Fixierung des Kaschierstoffes 6 auf der Bauteiloberfläche.

### Bezugszeichenliste

- 1: Druckwerkzeug
- 2: Unterwerkzeug
- 3: Oberwerkzeug
- 4: Nahtfixierbrille
- 5: Bauteil
- 6: Kaschierstoff
- 7: Aufnahme
- 8: Träger
- 9: Zwischenschicht

## Patentansprüche

1. Verfahren zum Kaschieren eines auf einem Unterwerkzeug (2) eines mit einer Kaschierpresse kombinierten Druckwerkzeuges (1) angeordneten mit einem vorfixierten Kaschierstoff (6) belegten Bauteils (5), insbesondere eines Innenverkleidungsbauteils für ein Kraftfahrzeug, mit den Schritten:
a) Fixieren des Kaschierstoffes (6) auf der Oberfläche des Bauteils (5) mit einer Nahtfixierbrille (4) bei offenem Druckwerkzeug (1);
b) Überführen des Unterwerkzeugs (2) mit Bauteil (5) und Nahtfixierbrille (4) in einen Kaschierofen;
c) Aktivieren einer zwischen Kaschierstoff (6) und Bauteil (5) vorgesehenen Klebeschicht;
d) Zurückführen des Unterwerkzeugs (2) mit Bauteil (5) und Nahtfixierbrille (4) in die Kaschierpresse,
e) Schließen des Druckwerkzeuges (1) durch Aufbringen eines Oberwerkzeuges (3) auf das Unterwerkzeug (2) und Zusammenführen von Oberwerkzeug (3) und Unterwerkzeug (2); und
f) Ausbilden einer fest haftenden Verbindung zwischen dem Kaschierstoff (6) und der Oberfläche des Bauteils (5),
wobei die Nahtfixierbrille (4) als integraler Bestandteil des Oberwerkzeugs (3) ausgebildet ist und beim Zusammenführen von Oberwerkzeug (3) und Unterwerkzeug (2) in Schritt e) auf dem mit dem Kaschierstoff (6) belegten Bauteil (5) verbleibt, wobei das Oberwerkzeug (3) eine Aufnahme (7) für die Nahtfixierbrille (4) aufweist, in die die Nahtfixierbrille (4) beim Schließen des Druckwerkzeugs (1) eingeführt wird.

2. Verfahren nach Anspruch 1,
**dadurch gekennzeichnet, dass** ein Kaschierstoff (6) mit oder ohne Naht, ausgewählt aus der Gruppe Leder, Kunststofffolie, Gewebe, Textil und Kunstleder, eingesetzt wird.

3. Verfahren nach Anspruch 1 oder 2,
**dadurch gekennzeichnet, dass** die Aktivierung der zwischen dem Kaschierstoff (6) und der Oberfläche des Bauteils (5) vorgesehenen Klebeschicht in Schritt c) als thermische Aktivierung eines wärmeaktivierbaren Klebers erfolgt.

4. Vorrichtung zum Kaschieren eines mit einem vorfixierten Kaschierstoff (6) belegten Bauteils (5), insbesondere eines Innenverkleidungsbauteils für ein Kraftfahrzeug, wobei die Vorrichtung ein mit einem Kaschierofen und einer Kaschierpresse kombiniertes Druckwerkzeug (1) umfasst, wobei das Druckwerkzeug (1) ein Oberwerkzeug (3) und ein Unterwerkzeug (2) umfasst, wobei das Unterwerkzeug (2) als Aufnahme für das Bauteil (5) vorgesehen ist,
wobei das Oberwerkzeug (3) eine Nahtfixierbrille (4) als integralen'Bestandteil aufweist und Aufnahmen (7) zur Einführung der Nahtfixierbrille (4) umfasst.

## Claims

1. A method of laminating a component (5), in particular an inner lining component for a motor vehicle, covered with a pre-fixed laminated fabric (6) and arranged on a lower die (2) of a pressure tool (1) combined with a laminating press, with the steps:
a) fixing the laminated fabric (6) on the surface of the component (5) with a seam-fixing frame (4) with the pressure tool (1) open;
b) transferring the lower die (2) with the component (5) and the seam-fixing frame (4) into a laminating furnace;
c) activating an adhesive layer provided between the laminated fabric (6) and the component (5);
d) returning the lower die (2) with the component (5) and the seam-fixing frame (4) into the laminating press,
e) closing the pressure tool (1) by applying an upper die (3) to the lower die (2) and bringing together the upper die (3) and the lower die (2), and
f) forming a firmly adhering join between the laminated fabric (6) and the surface of the component (5),
wherein the seam-fixing frame (4) is designed in the form of an integral component of the upper die (3) and, when the upper die (3) and the lower die (2) are brought together in step e), it remains on the component (5) covered with the laminated fabric (6), wherein the upper die (3) has a receiving means (7) for the seam-fixing frame (4) into which the seam-fixing frame (4) is inserted when the pressure tool (1) is closed.

2. A method according to claim 1, **characterized in that** a laminated fabric (6) with or without a seam is selected from the group of leather, plastics material film, fabrics, textiles and artificial leather.

3. A method according to claim 1 or 2, **characterized in that** the activation of the adhesive layer provided between the laminated fabric (6) and the surface of the component (5) in step c) is carried out as a thermal activation of an adhesive capable of being thermally activated.

4. An apparatus for laminating a component (5), in particular an inner lining component for a motor vehicle, covered with a pre-fixed laminated fabric (6), wherein the apparatus comprises a pressure tool (1) combined with a laminating furnace and a laminating press, wherein the pressure tool (1) comprises an upper die (3) and a lower die (2), wherein the lower die (2) is provided as a receiving means for the component (5), wherein the upper die (3) has a seam-fixing frame (4) as an integral component and receiving means (7) for the insertion of the seam-fixing frame (4).

## Revendications

1. Procédé pour contre-coller un composant (5) positionné sur un élément d'outil inférieur (2) d'un outil de pressage (1) combiné à une presse de contre-collage garni d'une matière à contre-coller préfixée (6), en particulier d'un composant d'habillage interne d'un véhicule auto-mobile comprenant les étapes consistant à :
a) fixer la matière à contre-coller (6) sur la surface du composant (5) avec une bride de fixation par soudure (4) lorsque l'outil de pressage (1) est ouvert,
b) transfert de l'élément d'outil inférieur (2) avec le composant (5) et la bride de fixation par soudure (4) dans un four de contre-collage,
c) activer une couche d'adhésif située entre la matière à contre-coller (6) et le composant (5),
d) ramener l'élément d'outil inférieur (2) avec le composant (5) et la bride de fixation par soudure (4) dans la presse de contre-collage,
e) fermer l'outil de pressage (1) par mise en place d'un élément d'outil supérieur (3) sur l'élément d'outil inférieur (2) et assemblage de l'élément d'outil supérieur (3) et de l'élément d'outil inférieur (2), et
f) réaliser une liaison à adhésivité permanente entre la matière de à contre-coller (6) et la surface du composant (5),
selon lequel la bride de fixation par soudure (4) est réalisée de façon à faire bloc avec l'élément d'outil supérieur (3), et lors de l'assemblage de l'élément d'outil supérieur (3) et de l'élément d'outil inférieur (2) dans l'étape e) reste sur le composant (5) garni de la matière à contre-coller (6), l'élément d'outil supérieur (3) comprenant un logement de réception (7) de la bride de fixation par soudure (4) dans lequel est introduite cette bride de fixation par soudure (4) lors de la fermeture de l'outil de pressage (1).

2. Procédé conforme à la revendication 1,
**caractérisé en ce que**
l'on utilise une matière à contre-coller (6) avec ou sans soudure choisie dans le groupe formé par le cuir, les films en matériau synthétique, les tissus, les textiles et le cuir synthétique.

3. Procédé conforme à la revendication 1 ou 2,
**caractérisé en ce que**
l'activation de la couche d'adhésif située entre la matière à contre-coller (6) et la surface du composant (5) dans l'étape c) est effectuée sous la forme d'une activation thermique d'un adhésif activable par la chaleur.

4. Dispositif permettant de contre-coller un composant (5) garni d'une matière à contre-coller (6) préfixée, en particulier un élément d'habillage interne d'un véhicule automobile, ce dispositif comprenant un outil de pressage (1) combiné à un four de contre-collage et à une presse de contre-collage, l'outil de pressage (1) comprenant un élément d'outil supérieur (3) et un élément d'outil inférieur (2) et l'élément d'outil inférieur (2) étant prévu pour recevoir le composant (5), dispositif dans lequel l'élément d'outil supérieur (3) comporte une bride de fixation par soudure (4) faisant bloc avec lui et des logements (7) de réception de cette bride de fixation par soudure (4).
